# EUROPÄISCHE PATENTSCHRIFT

(11) **EP 3 115 163 B1**
(45) Veröffentlichungstag und Bekanntmachung des Hinweises auf die Patenterteilung: **01.08.2018**
(21) Anmeldenummer: 16000976.7
(22) Anmeldetag: 29.04.2016
(51) Int. Cl.: G01B 11/06, B27D 5/00

(54) **VERFAHREN UND VORRICHTUNG ZUR KANTENDICKENMESSUNG BEIM AUFBRINGEN VON KANTENKASCHIERUNG AUF DIE SCHMALSEITEN PLATTENFÖRMIGER WERKSTÜCKE**
METHOD AND DEVICE FOR EDGE THICKNESS MEASUREMENT WHEN APPLYING EDGE LAMINATION TO THE NARROW SIDES OF FLAT WORKPIECES
PROCÉDÉ ET DISPOSITIF DE MESURE D'ÉPAISSEUR D'ARÊTE LORS DE L'APPLICATION DE DOUBLAGE DE BORD DE PAROIS FINES DE PIÈCES À USINER EN FORME DE PLAQUE

(30) Priorität: 09.07.2015 DE 102015008891
(43) Veröffentlichungstag der Anmeldung: 11.01.2017
(73) Patentinhaber: IMA Klessmann GmbH Holzbearbeitungssysteme, 32312 Lübbecke (DE)
(72) Erfinder: Hielscher, Ulrich, DE - 33212 Lübbecke (DE)
(74) Vertreter: Schober, Mirko

(56) Entgegenhaltungen:
- EP-A2- 1 464 470
- DE-A1-102004 054 670
- DE-A1-102008 029 166
- DE-A1-102009 048 442

## Beschreibung

Die Erfindung betrifft ein Verfahren und eine Vorrichtung zur Aufbringung von Kantenkaschierungen auf die Schmalseiten plattenförmiger Werkstücke.

Derartige Verfahren kommen insbesondere bei der Herstellung von Werkstücken aus Holz und/oder Holzersatzwerkstoffen, wie beispielsweise Spanplatten, HDF, MDF oder Laminaten zum Einsatz. Regelmäßig dienen die so hergestellten plattenförmigen Werkstücke wiederum selbst als Halbzeuge, beispielsweise für die Herstellung von Möbel, Türen oder dergleichen.

Ein gattungsgemäße Verfahren ist beispielsweise aus DE 10 2009 048 442 A1 bekannt. Bei dem bekannten Verfahren werden auf dem Werkstück Strukturen identifiziert, um das Werkstück vor einer spanabhebenden Bearbeitung auszurichten. Hierbei soll die Position dieser Strukturen auf dem bearbeiteten Werkstück nach der Bearbeitung der Schmalseiten in einer bestimmten Relation zu den Schmalseiten stehen. Dies soll dazu dienen, dass die Produkte, beispielsweise als Einzelteile von Fußboden belegen, beim aneinanderfügen bestimmte grafische Muster ausbilden sollen.

Aus DE 10 2008 029 166 A1 ist eine Maschine zum Beschichten von Schmalflächenseiten plattenförmiger Werkstücke bekannt. Zur Ermittlung der Dicke einer aufgebrachten Kantenkaschierung weist die bekannte Vorrichtung eine Messvorrichtung auf, welche die Dickentoleranzen des jeweiligen Kantenbandes erfasst.

Aus EP 1 464 470 A2 ist eine Kantenbearbeitungsmaschine bekannt, bei der optoelektronische Mittel zur Aufnahme von Bildern des vorderen Profils und des hinteren Profils eines Kantenbandes vorgesehen sind. Dies dient dazu, wenigstens in etwa die Profilgeometrie des Kantenbandes zu bestimmen und das Ergebnis an die Maschine zurückzugeben, um Schnitttrajektorien zu ermitteln, um den Überstand bzw. Verschnitt des Kantenbandes zu minimieren.

Schließlich offenbart die DE 10 2004 054 670 A1 eine Vorrichtung zur doppelseitigen Bearbeitung von Möbelplatten. Hierbei ist eine Messeinrichtung vorgesehen, die die tatsächliche Breite der mit den Kantenbändern versehenen Möbelplatte erfassen.

Bei der Verarbeitung plattenförmiger Werkstücke wird normalerweise so vorgegangen, dass aus vergleichsweise großformatigen Rohlingen, welche auf ihren Flächenseiten bereits eine dekorative und/oder funktionale Gestaltung der Oberfläche aufweisen, kleinere Werkstücke mit den gewünschten Abmessungen geschnitten werden. Erst danach werden die Schmalseiten - welche auch als Kanten bezeichnet werden - mit Kaschierungen versehen. Diese Kantenkaschierungen weisen regelmäßig ein sogenanntes Kantenband auf, d.h. ein streifenförmiges Material zur Kaschierung der Kante, welches mit der Kante verleimt, verklebt, verschmolzen oder auf eine ähnliche Weise verbunden wird. Dabei kann es zu einem Auftrag eines Leims oder eines Klebstoffes kommen, es ist aber auch möglich, dass Bereiche der Kante und/oder des Kantenbands als Verbindungsmittel genutzt werden, beispielsweise eine Schmelzkleberschicht auf dem Kantenband aufgeschmolzen wird oder eine Schicht des Kantenbands beispielsweise mit einem Laser oder einem Heißluftstrom bzw. einer Plasmaflamme aufgeschmolzen wird.

Die aufgebrachte Kantenkaschierung weist regelmäßig einen Überstand in ihrer Breitenrichtung auf, der entfernt wird. Durch Nachbearbeitungsschritte, zu denen insbesondere das Fräsen und/oder das Ziehen zu zählen sind, wird regelmäßig der Übergangsbereich zwischen den Flächenseiten und der Kantenkaschierung nachbearbeitet. Dabei gestaltet sich die Ansteuerung bzw. Zustellung der hierfür verwendeten Werkzeuge oftmals problematisch, da die Dicke der Kantenkaschierung innerhalb gewisser Toleranzen variiert.

Um dem entgegenzuwirken, sind in der Vergangenheit Verfahren und Vorrichtungen, wie beispielsweise in der EP 2 394 803 A2 gezeigt, entwickelt worden, bei denen das aufzubringende Kantenband hinsichtlich seiner Dicke vermessen wird. Die so gewonnenen Daten werden dann zur Ansteuerung einer Kantennachbearbeitungseinrichtung verwendet. Hierdurch können zwar Schwankungen der Dicke des aufzubringenden Kantenbandes ausgeglichen bzw. berücksichtigt werden, es hat sich jedoch gezeigt, dass die Nachbearbeitung der Kanten nach wie vor mit Genauigkeitsproblemen verbunden ist.

Der Erfindung liegt daher die Aufgabe zugrunde, ein Verfahren und eine Vorrichtung der eingangs genannten Art aufzuzeigen, welche eine höhere Genauigkeit bei der Nachbearbeitung der Kanten ermöglichen.

Die Aufgabe wird gelöst durch ein Verfahren und eine Vorrichtung mit den Merkmalen der unabhängigen Ansprüche. Die Merkmale der abhängigen Ansprüche betreffen vorteilhafte Ausführungsformen.

Das erfindungsgemäße Verfahren sieht vor, dass zur Ermittlung der Dicke der aufgebrachten Kantenkaschierung die Position einer Markierung, insbesondere eines als Markierung genutzten Oberflächenmerkmals ermittelt wird.

Es hat sich überraschenderweise gezeigt, dass die Schwierigkeiten bei der Nachbearbeitung im Bereich des Übergangs zwischen dem Kantenband und einer Flächenseite des Werkstücks in vielen Fällen nicht oder nicht nur von Dickentoleranzen des aufzubringenden Kantenbands selber herrühren. Es ist vielmehr so, dass die Dicke der Kantenkaschierung im aufgebrachten Zustand nicht immer zwingend der Dicke des aufgebrachten Kantenbands entspricht bzw. streng mit dieser korreliert.

Je nachdem, mit welchem Verfahren das Kantenband auf die Schmalseite des Werkstücks aufgebracht wird, kann es beispielsweise dazu kommen, dass durch eine Leimschicht die Dicke der Kantenkaschierung - in diesem Fall Leimschicht und Kantenband - größer ist als die Dicke des Kantenbandes. Durch Unregelmäßigkeiten im Leim- bzw. Klebstoffauftrag können diese Dickenabweichungen zusätzlich variieren.

Bei schmelzkleberbeschichteten Kantenbändern oder Kantenbändern, bei denen Kunststoffschichten ganz oder partiell, beispielsweise mit einem Laser aufgeschmolzen werden, kann es sein, dass ein Teil des angeschmolzenen bzw. aufgeschmolzenen Materials beim Andrücken des Kantenbands an die Schmalseite des Werkstücks zwischen Werkstück und Kantenband hervorquillt. Dieser Materialüberstand - der regelmäßig bei der Nachbearbeitung entfernt wird - führt dann dazu, dass die Dicke der Kantenkaschierung im Ergebnis geringer ist als die Dicke des auf die Kante aufzubringenden Kantenbandes. Auch kann aufgeweichtes Material des Kantenbandes in Poren auf der Schmalseite eingedrückt werden. Dies wiederum hängt auch von den Eigenschaften des Werkstücks, insbesondere von dessen Porenstruktur ab. Auch hier kann der Prozess Schwankungen unterworfen sein, so dass Schwankungen der Dicke der Kantenkaschierung auftreten, die unabhängig von der tatsächlichen Dicke des Kantenbandes vor dem Aufbringen sind.

Im Rahmen der vorliegenden Erfindung hat sich daher überraschenderweise gezeigt, dass eine Ermittlung der tatsächlichen Dicke der Kantenkaschierung möglich ist, indem die Position einer Markierung, insbesondere eines als Markierung genutzten Oberflächenmerkmals ermittelt wird. Diese Markierung ist vorzugsweise auf, an und/oder in dem Werkstück an-, auf- oder eingebracht. Grundsätzlich kommt jede Art von Markierung in Frage, deren Position sich eindeutig mit entsprechenden Erkennungsmethoden bestimmen lässt, also insbesondere optische, tastbare und/oder elektronische Markierungen, wie beispielsweise RFID-Tags oder dergleichen. Mit Hilfe der Position dieser Markierung lässt sich so die tatsächliche Dicke der aufgebrachten Kantenkaschierung bestimmen. Hierfür wird erfindungsgemäß ein erster Abstand der Markierung von einer ersten Referenzposition auf der Oberfläche des Kantenbandes gemessen. Die Referenzposition auf der Oberfläche des Kantenbandes kann dabei beispielsweise in einfacher Weise durch einen Anschlag und/oder einen Taster festgelegt und/oder ermittelt werden. Ist die Position der Markierung relativ zum Werkstück bekannt, kann aus diesem Abstand so die Dicke der Kantenkaschierung errechnet werden.

Eine vorteilhafte Weiterbildung der vorliegenden Erfindung sieht vor, dass die Markierung vor dem Aufbringen des Kantenbandes auf das Werkstück aufgebracht wird. Das Aufbringen der Markierung erfolgt dann vorzugsweise so, dass sich die Markierung nach dem Aufbringen an einer definierten Position relativ zum Werkstück, insbesondere zu der mit dem Kantenband zu versehenden Schmalseite des Werkstücks, befindet. Dies kann beispielsweise dadurch sichergestellt werden, dass die mit dem Kantenband zu versehende Kante des Werkstücks an einem definierten Anschlag anliegt, während das Werkstück mit der Markierung versehen wird. Durch das Aufbringen der Markierung in einer streng definierten Position relativ zum Werkstück ist so die Position der Markierung bekannt. Alternativ und/oder ergänzend kann die Position der Markierung relativ zum Werkstück, insbesondere zu der mit dem Kantenband zu versehenden Schmalseite des Werkstücks nachträglich, insbesondere vor dem Aufbringen des Kantenbandes, bestimmt werden. Dies kann auch ergänzend erfolgen, um eine höhere Genauigkeit der Positionsbestimmungen zu erzielen.

Eine weitere Möglichkeit besteht in der Nutzung einer identifizierbaren Position auf dem Werkstück als Markierung. Diese Position kann insbesondere aufgrund der Struktur und/oder der Musterung, also der räumlichen und/ oder optischen Ausprägung der Oberfläche des Werkstücks identifizierbar sein. So kann beispielsweise ein charakteristischer Teil einer ansonsten zufälligen Maserung auf der Oberfläche des Werkstücks als Markierung genutzt werden. Ebenso ist es möglich, auf der Oberfläche des Werkstücks befindliche Fremdstoffe als Markierung zu nutzen. Dabei kann es sich insbesondere um auf der Oberfläche des Werkstücks anhaftenden Staub, Sägemehl bzw. -späne oder ähnliche Verschmutzungen handeln. Ein Oberflächenmerkmal, das durch derartige Fremdstoffe gebildet ist, hat insbesondere den Vorteil, dass es im Rahmen einer Reinigung des Werkstücks nach Durchlaufen einer Produktion ohnehin entfernt wird bzw. im Rahmen der Produktion auch bei solchen Werkstücken ohnehin entsteht, bei denen eine ansonsten homogene Oberfläche keine als Markierung benutzbaren Oberflächenmerkmale bereitstellt.

Insbesondere bei plattenförmigen Werkstücken aus Holz bzw. Holzersatzwerkstoffen, wie beispielsweise Spanplatten, kann auch eine von der mit dem Kantenband zu versehende Schmalseite verschiedene Schmalseite genutzt werden. Eine solche Schmalseite weist dann regelmäßig eine Schnittfläche auf, die aufgrund der heterogenen Struktur des Werkstoffs eine einmalige Struktur bzw. Musterung aufweist. Die Struktur bzw. Musterung an einer definierten Position kann dann ähnlich wie ein "Fingerabdruck" identifiziert werden. Auf diese Weise ist es insbesondere möglich, die an die mit dem Kantenband zu versehende Schmalseite angrenzenden und zu dieser rechtwinkligen Schmalseite zu nutzen, um die Dicke der aufgebrachten Kantenkaschierung zu bestimmen.

In diesem Zusammenhang hat sich insbesondere die Identifizierung der Markierung mit optischen Methoden als vorteilhaft erwiesen. Moderne Kamerasysteme können in einer hohen Geschwindigkeit sehr hochauflösende Aufnahmen von den Oberflächen der Werkstücke machen. Diese können dann durch ein geeignetes Bildverarbeitungssystem automatisiert ausgewertet werden, um die Position der Markierungen, seien dies zu diesem Zweck extra aufgebrachte Markierungen oder charakteristische, aufgrund von Struktur und/oder Musterung identifizierbare Bereiche, auf der Oberfläche des Werkstücks zu bestimmen. Solche Systeme können rein optisch arbeiten, es sind ebenfalls kombinierte Systeme denkbar, bei denen ein Anschlag bzw. ein Taster, der an der Oberfläche der mit dem Kantenband zu versehenden Schmalseite bzw. der Kantenkaschierung anliegt, mit einem optischen System zur Erkennung der Position der Markierung zusammenarbeitet.

Auch sind Markierungen denkbar, die lediglich in einem bestimmten Lichtspektrum sichtbar werden, somit vorzugsweise für das menschliche Auge unsichtbar aufgebracht werden können, jedoch durch entsprechende optische Systeme mit geeigneten Filtern oder ähnlichem und/oder mit einer bestimmten Hilfsbeleuchtung, beispielsweise mit UV- oder Infrarotlicht identifizierbar sind. Ferner kann eine Markierung auch auf der lokalen, temporären Änderung physikalischer Eigenschaften des Werkstücks, insbesondere der Werkstückoberfläche basieren. So ist es beispielsweise denkbar, durch eine Erhöhung bzw. Senkung der Temperatur an einer Stelle des Werkstücks eine Markierung zu erzeugen. Diese Markierung könnte dann beispielsweise durch Wärmebildkameras erfasst und deren Position exakt bestimmt werden. Hierfür ist lediglich erforderlich, dass die Weiterverarbeitung des Werkstücks, insbesondere die Bestimmung der Position der Markierung, in einem zeitlichen Abstand zu deren Aufbringung erfolgt, der kurz genug gewählt ist, um eine Identifikation der Markierung noch zu ermöglichen. Als besonders vorteilhaft hat sich in diesem Zusammenhang herausgestellt, die Markierung mittels eines Lasers aufzubringen. So kann mittels eines Lasers die Temperatur an einer bestimmten Stelle des Werkstücks temporär erhöht werden. Der besondere Vorteil des Lasers ist, dass mit ihm äußerst präzise eine bestimmte Position markiert werden kann. Auch ist es mit dem Laser möglich, Muster für die Markierungen zu erzeugen, die eine besonders gute Identifikation der Markierung mittels der Wärmebildkamera ermöglichen.

Das erfindungsgemäße Verfahren sieht weiter vor, dass zur Ermittlung der Dicke der Kantenkaschierung der erste Abstand der Markierung von der ersten Referenzposition auf der Oberfläche des Kantenbandes mit einem zweiten Abstand der Markierung von einer zweiten Referenzposition auf der Oberfläche der mit dem Kantenband zu versehenden Schmalseite verglichen wird. Der zweite Abstand kann dabei beim Aufbringen der Markierung auf einen bekannten Wert festgelegt werden oder gemessen werden. Die Dicke der Kantenkaschierung wird erfindungsgemäß durch Bildung der Differenz zwischen dem ersten Abstand und dem zweiten Abstand bestimmt.

Vorzugsweise erfolgt eine Nachbearbeitung der Kanten mit einer Kantennachbearbeitungseinrichtung. Diese wird vorzugsweise aufgrund der über die Dicke der aufgebrachten Kantenkaschierung gewonnenen Daten angesteuert. Bei der Kantennachbearbeitungseinrichtung handelt es sich insbesondere um eine Fräse und/oder eine Ziehklinge, die insbesondere im Bereich des Übergangs zwischen dem Kantenband und einer Fläche des Werkstücks an der Kantenkaschierung angreifen. Durch diese Ansteuerung der Kantennachbearbeitungseinrichtung ist es möglich, die Übergänge zwischen der Flächenseite und der Kantenkaschierung mit einer höchst möglichen Genauigkeit zu bearbeiten.

Das erfindungsgemäße Verfahren kann dabei in Bearbeitungszentren zum Einsatz kommen. Unter einem Bearbeitungszentrum ist hierbei insbesondere eine Vorrichtung zum Aufbringen von Kantenkaschierungen zu verstehen, bei denen das Werkstück ruht und ein vorzugsweise in eine Mehrzahl Raumrichtungen bewegliches Bearbeitungsaggregat zum Aufbringen der Kantenkaschierung an einer Schmalseite des Werkstücks entlang bewegt wird. Ebenfalls kann das erfindungsgemäße Verfahren in vorteilhafter Weise an sogenannten Durchlaufmaschinen eingesetzt werden. Bei Durchlaufmaschinen ruhen die Bearbeitungsaggregate, insbesondere Einrichtungen zum Aufbringen des Kantenbands und/oder Kantennachbearbeitungseinrichtungen, während die Werkstücke - im Durchlauf - an den Bearbeitungsaggregaten vorbei bewegt werden.

Eine erfindungsgemäße Vorrichtung zur Messung von Dicken von Kantenkaschierungen weist demnach eine Positionsbestimmungseinrichtung auf, die dazu ausgebildet ist, eine Position einer Markierung eines plattenförmigen Werkstücks zu bestimmen und eine Auswerteeinrichtung, die dazu eingerichtet ist, aufgrund der Position der Markierung die Dicke der Kantenkaschierung zu bestimmen. Eine derartige Vorrichtung zur Messung der Dicke von Kantenkaschierungen kann vorzugsweise Bestandteil einer Vorrichtung zum Aufbringen von Kantenkaschierungen sein, wobei es sich um beide vorstehend behandelten Maschinentypen handeln kann.

Die erfindungsgemäße Vorrichtung zum Aufbringen von Kantenkaschierungen weist dann vorzugsweise eine Steuereinrichtung auf. Die Steuereinrichtung dient vorzugsweise zur Steuerung einer Kantennachbearbeitungseinrichtung und ist dazu eingerichtet, die Kantennachbearbeitungseinrichtung in Abhängigkeit der Dicke der Kantenkaschierung anzusteuern. Insbesondere wird die Zustellung der Werkzeuge - insbesondere Fräsköpfe und/oder Ziehklingen - in Abhängigkeit von der nach dem erfindungsgemäßen Verfahren ermittelten Dicke der Kantenkaschierung angesteuert.

Die Kantennachbearbeitungseinrichtung kann dabei Teil der erfindungsgemäßen Vorrichtung zum Aufbringen von Kantenkaschierungen sein. Dies ist beispielsweise der Fall, wenn es sich um unterschiedliche Bearbeitungsstationen zum Aufbringen des Kantenbands und Nachbearbeiten der Kante einer Durchlaufmaschine handelt oder wenn in einem Bearbeitungszentrum entsprechend Aggregate nacheinander eingesetzt werden. Es ist aber auch möglich, dass beispielsweise im Rahmen einer Produktion die die Dicken betreffenden Daten der Kantenkaschierung in der erfindungsgemäßen Vorrichtung lediglich ermittelt und gespeichert bzw. an andere Einrichtungen übermittelt werden. Dabei werden die Daten vorzugsweise so aufbereitet, dass sie konkreten Werkstücken zugeordnet werden können. Eine derartige Speicherung der Daten kann beispielsweise zu Qualitätssicherungszwecken sinnvoll sein, sogar dann, wenn keine unmittelbare Ansteuerung einer Kantennachbearbeitungseinrichtung aufgrund dieser Daten erfolgt. Weiterhin ist es im Rahmen einer integrierten Produktion möglich, dass die mit einer erfindungsgemäßen Vorrichtung zur Messung von Dicken von Kantenkaschierungen gewonnenen Daten zur Steuerung einer Kantennachbearbeitungseinrichtung genutzt werden, die nicht Bestandteil der erfindungsgemäßen Vorrichtung zum Aufbringen von Kantenkaschierungen ist, beispielsweise wenn die Kantennachbearbeitung an einem anderen Standort bzw. in einem anderen Werk oder erst in einer anderen Produktionsstraße stattfindet.

Die Erfindung wird im Folgenden anhand der Figuren 1 bis 6 schematisch näher erläutert.
Fig. 1 zeigt beispielhafte Querschnitte von Kantenkaschierungen vor und nach der Nachbearbeitung.
Fig. 2 zeigt eine schematische Darstellung der korrekten Zustellung eines Nachbearbeitungswerkzeugs an einer beispielhaften Kantenkaschierung.
Fig. 3 zeigt schematische Darstellungen mit herkömmlichen Verfahren bearbeiteter Kantenkaschierungen bei schwankender Dicke der Kantenkaschierung.
Fig. 4 zeigt eine schematische Darstellung des erfindungsgemäßen Messprinzips.
Fig. 5 zeigt schematische Darstellungen beispielhafter erfindungsgemäßer Vorrichtungen.
Fig. 6 zeigt Schnittdarstellungen beispielhafter erfindungsgemäßer Vorrichtungen.

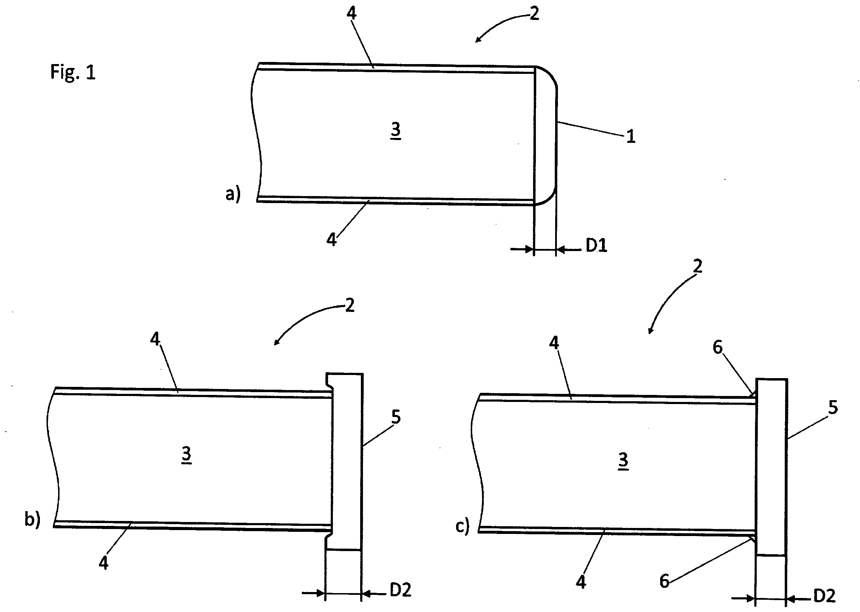

Fig. 1a zeigt eine beispielhafte Kantenkaschierung 1 der in Rede stehenden Art, die auf ein Werkstück 2 aufgebracht ist. Das beispielhafte Werkstück 2 weist dabei eine Kernlage 3 vorzugsweise aus Holz oder einem Holzersatzwerkstoff auf. Auf den Flächenseiten des beispielhaften Werkstücks 2 sind vorzugsweise dekorative und/oder funktionale Beschichtungen 4 aufgebracht. Die Kantenkaschierung 1 weist im gezeigten Beispiel die Dicke D1 auf.

Die Fig. 1b und 1c zeigen mögliche Zwischenstadien bei der Herstellung der in der Fig. 1a gezeigten Kantenkaschierung 1. Dabei zeigt das in Fig. 1b dargestellte Zwischenstadium das Werkstück 2 mit bereits auf die Schmalseite aufgebrachtem Kantenband 5 bevor eine Nachbearbeitung des auf die Schmalseite aufgebrachten Kantenbands 5 zur fertigen Kantenkaschierung 1 erfolgt. Bei dem in der Fig. 1b dargestellten Szenario hat sich das Werkstück 2 in das Kantenband 5 beim Andrücken des Kantenbands 5 an die Schmalseite des Werkstücks 2 eingedrückt. Infolgedessen wird die Dicke der fertigen Kantenkaschierung 1 geringer sein als die ursprüngliche Dicke D2 des Kantenbandes 5. Dieses Szenario tritt beispielsweise bei der Verwendung sogenannter "Laserkanten" auf. Es betrifft aber grundsätzlich alle Kantenkaschierungen, bei denen eine feste Schicht des Kantenbands 5 als Haftschicht oder haftvermittelnde Schicht aktiviert, beispielsweise angeschmolzen wird.

Bei dem in Fig. 1c gezeigten Szenario ist ein Haftvermittler 6, wie beispielsweise ein Leim oder ein Klebstoff, zwischen dem Kantenband 5 und der Schmalseite des Werkstücks 2 eingebracht worden. Hierbei kann es vorkommen, dass überschüssiger Haftvermittler 6 - wie dargestellt - zwischen dem Kantenband 5 und dem Werkstück 2 hervorquillt. In solchen Fällen kann es vorkommen, dass überflüssiger Haftvermittler 6 bei einem Andrücken des Kantenbands 5 an die Schmalseite des Werkstücks 2 zwischen dem Werkstück 2 und dem Kantenband 5 verbleibt und so eine Zunahme der Dicke D1 der Kantenkaschierung 1 gegenüber der Dicke D2 des Kantenbandes 5 verursacht.

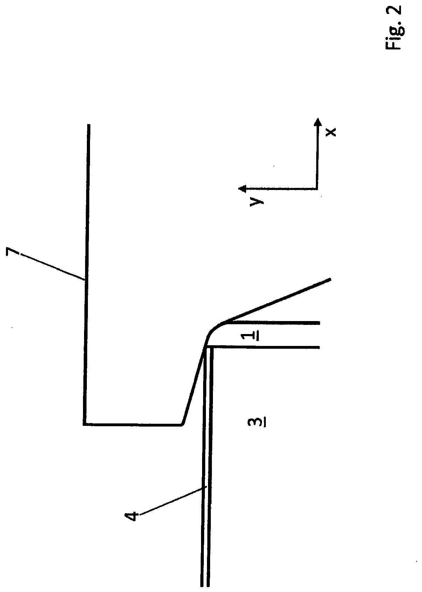

Fig. 2 zeigt die ideale Situation bei der Nachbearbeitung einer Kantenkaschierung 1 in einer schematischen Darstellung. Die Kantennachbearbeitungseinrichtung 7 - in Fig. 2 beispielhaft dargestellt als in der Kontur angepasste Werkzeugschneide - greift derart an der Kantenkaschierung 1 an, dass ein exakter Übergang zwischen der Beschichtung 4 und der Kantenkaschierung 1 entsteht.

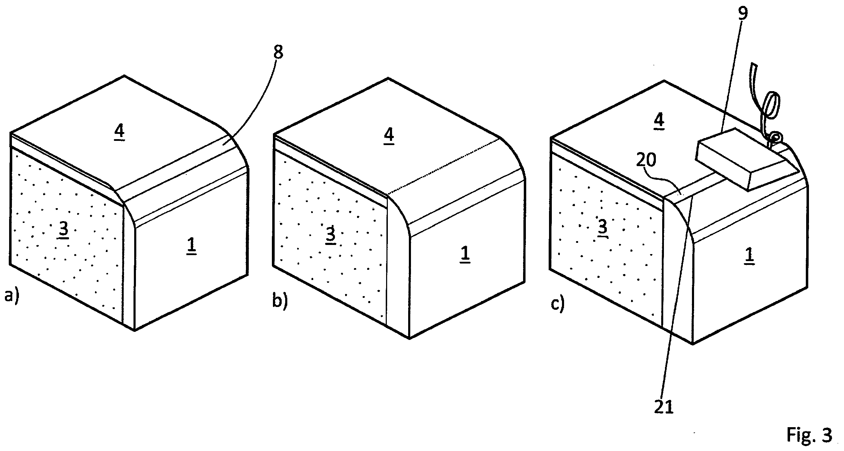

Kommt es nun, wie im Zusammenhang mit Fig. 1 beschrieben, zu Schwankungen der Dicke des Kantenbands 5, können die in der Fig. 3 schematisch dargestellten Szenarien auftreten. Bei zu starker Zustellung der Nachbearbeitungseinrichtung 7 wird - wie in Fig. 3a dargestellt - die Beschichtung 4 durch die Nachbearbeitungseinrichtung 7 beschädigt. Hierdurch kann es möglich sein, dass eine Schicht 8 der Beschichtung 4 im Bereich des Übergangs zwischen der Kantenkaschierung 1 und der Beschichtung 4 sichtbar wird, was optisch störend und/oder die Funktionalität - beispielsweise aufgrund fehlender Dichtwirkung gegen Wasserdampf oder ähnliches - beeinträchtigt. Im schlimmsten Fall kann sogar die Kernlage 3 im Bereich des Übergangs zwischen der Beschichtung 4 und der Kantenkaschierung 1 freigelegt werden. Fig. 3b zeigt im Vergleich dazu das Ergebnis der Nachbearbeitung bei korrekter Zustellung.

Ist die Kantenkaschierung 1 dicker als beabsichtigt und demzufolge die Zustellung der Nachbearbeitungseinrichtung 7 zu gering, kommt es zu dem in Fig. 3c dargestellten Szenario. Es entsteht ein unerwünschter Materialüberstand der Kantenkaschierung 1 gegenüber der Beschichtung 4, der gegebenenfalls, wie in Fig. 3 gezeigt, mit einer weiteren Nachbearbeitungseinrichtung wie einer Ziehklinge 9 in einem weiteren Bearbeitungsschritt entfernt werden muss. Hierdurch entsteht jedoch eine Fläche 20 im Bereich des Kantenbandes und eine zusätzliche optische Kante 21, an der die Fläche 20 in die - im gezeigten Beispiel abgerundete - Kontur des Kantenbandes übergeht. Solche Flächen 20 und optische Kanten 21 können optisch störend sein und werden gemeinhin als Qualitätsmangel angesehen.

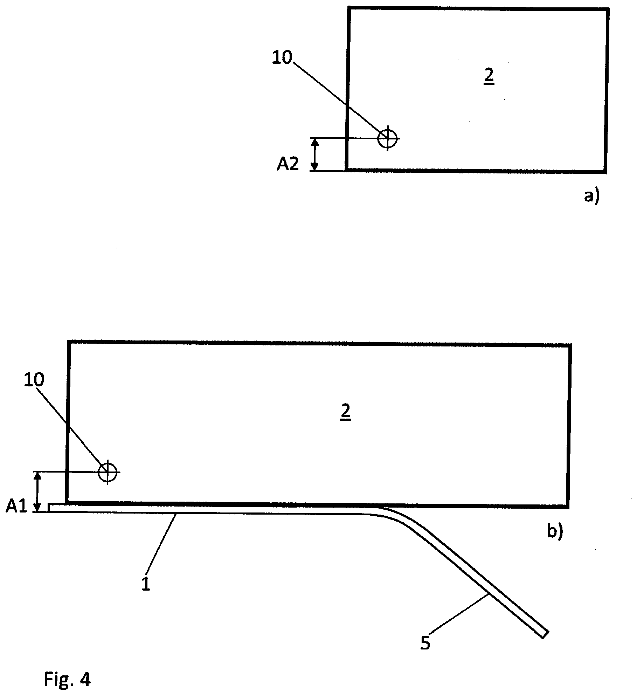

Fig. 4 verdeutlicht, wie nach dem erfindungsgemäßen Verfahren in vorteilhafter Weise die Dicke der Kantenkaschierung 1 ermittelt werden kann. Wie in Fig. 4a schematisch dargestellt, wird zunächst der zweite Abstand A2 zwischen der mit der Kantenkaschierung 1 zu versehenden Schmalseite des Werkstücks 2 und der Markierung 10 ermittelt bzw. gemessen und/oder durch das gezielte Anbringen der Markierung 10 in einem bestimmten Abstand A2 von der Schmalseite festgelegt. Es besteht auch die Möglichkeit, eine bestimmte identifizierbare Oberflächenstruktur des Werkstücks 2 in einem definiertem Abstand A2 von der Schmalseite zu identifizieren und als Markierung zu nutzen.

Fig. 4b zeigt nun schematisch die Bestimmung des ersten Abstands A1 von der Oberfläche der Kantenkaschierung 1 zur Markierung 10. Durch die Bildung der Differenz zwischen den Abständen A1 und A2 lässt sich so die Dicke der Kantenkaschierung bestimmen.

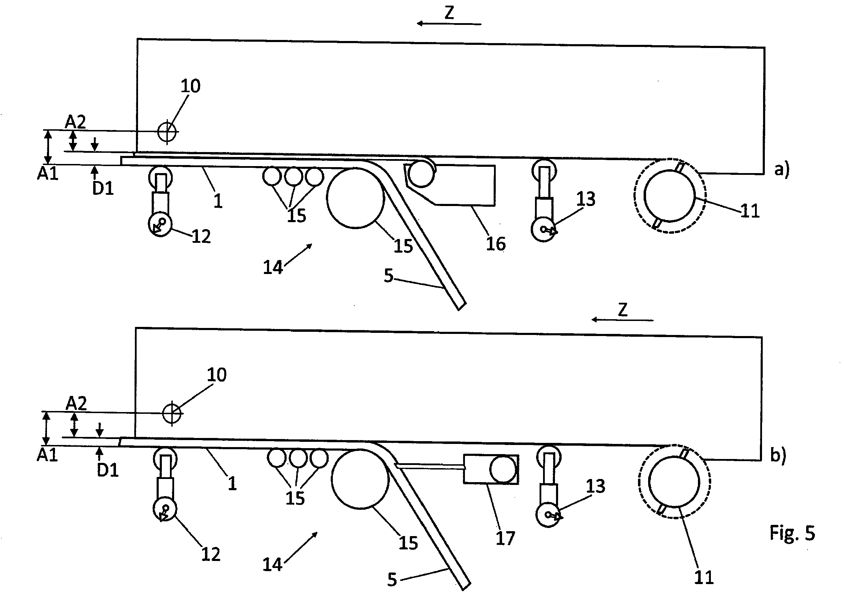

Fig. 5 zeigt schematische Darstellungen beispielhafter erfindungsgemäßer Vorrichtungen. Bei den gezeigten Vorrichtungen handelt es sich um Durchlaufmaschinen, bei denen das Werkstück 2 in einer Förderrichtung Z an den Bearbeitungsaggregaten bzw. -einrichtungen vorbei gefördert wird, während diese die verschiedenen Bearbeitungsschritte am Werkstück 2 ausführen. Zunächst passiert das Werkstück 2 eine Formatierungseinrichtung 11, welche durch einen Materialabtrag an der mit der Kantenkaschierung 1 zu versehenden Schmalseite des Werkstücks 2 das Werkstück 2 auf die gewünschte Abmessung bringt.

Die beispielhaften erfindungsgemäßen Vorrichtungen weisen jeweils eine erste Referenzpositionsbestimmungseinrichtung 12 und eine zweite Referenzpositionsbestimmungseinrichtung 13 auf, die im gezeigten Beispiel als Taster ausgeführt sind und dazu dienen, die erste Referenzposition auf der Oberfläche der Kantenkaschierung 1 und die zweite Referenzposition auf der mit der Kantenkaschierung 1 zu versehenden Schmalseite des Werkstücks 2 zu bestimmen.

Zwischen den Referenzpositionsbestimmungseinrichtungen 12 und 13 sind bei den beispielhaft dargestellten erfindungsgemäßen Vorrichtungen Kantenbandaufbringungseinrichtungen 14 angeordnet. Diese weisen wiederum jeweils eine Andruckeinrichtung 15 und - im Fall des in Fig. 5a dargestellten Beispiels - eine Leimauftragseinrichtung 16 bzw. - im Fall des in Fig. 5b gezeigten Ausführungsbeispiels - eine beispielhaft als Laser ausgeführte Aktivierungseinrichtung 17 zur Aktivierung einer Haftschicht des Kantenbandes 5 auf.

Die Ermittlung der Dicke D1 der Kantenkaschierung 1 erfolgt bei den in Fig. 5 dargestellten beispielhaften erfindungsgemäßen Vorrichtungen durch Bildung der Differenz zwischen dem ersten Abstand A1 zwischen der ersten Referenzposition und der Markierung 10 und dem Abstand A2 zwischen der zweiten Referenzposition und der Markierung 10. Zur Bestimmung der Position der Markierung 10 weisen die in Fig. 5 dargestellten Vorrichtungen entsprechende nicht dargestellte Positionsbestimmungseinrichtungen 18 auf.

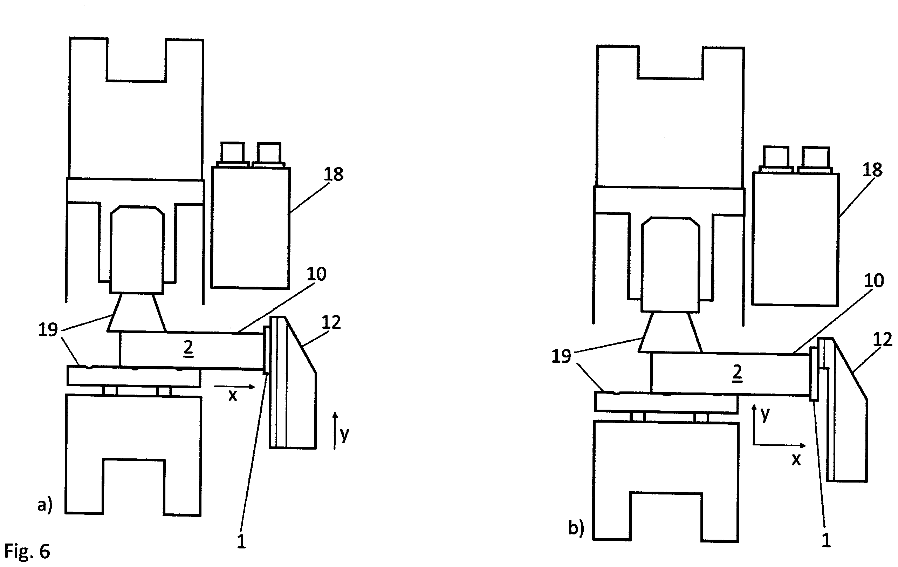

Die Positionsbestimmungseinrichtungen 18 können, wie in Fig. 6 beispielhaft dargestellt, als optische Positionsbestimungseinrichtungen, beispielsweise als Kameras ausgeführt sein und so eine berührungslose Bestimmung der Position der Markierung ermöglichen. Eine beispielhafte Anordnung einer solchen Positionsbestimmungseinrichtung 18 ist in Fig. 6 beispielhaft dargestellt. Die Positionsbestimmungseinrichtung 18 kann die Position der Markierung 10 auf dem Werkstück 2 ermitteln, während dieses in einer Fördereinrichtung 19 gefördert wird. Die Fördereinrichtung 19 besteht im gezeigten Beispiel aus der Kombination einer Förderkette und eines Oberdrucks.

Die Fig. 6a und 6b zeigen zwei beispielhafte Varianten der erfindungsgemäßen Vorrichtung, in denen unterschiedliche als Taster oder Anschläge ausgebildete Referenzpositionsbestimmungseinrichtungen 12 zum Einsatz kommen. Die in Fig. 6a dargestellte beispielhafte Referenzpositionseinrichtung greift über die gesamte Breite der Kantenkaschierung 1 in deren Breitenrichtung Y an der Oberfläche der Kantenkaschierung an. Die so ermittelte erste Referenzposition auf der Oberfläche des Kantenbandes entspricht so der Position in Breitenrichtung Y der Kantenkaschierung 1, in der diese die größte Dicke aufweist bzw. am weitesten in Dickenrichtung X vorsteht. Eine derartige Gestaltung der Vorrichtung ist besonders dann sinnvoll, wenn an eine Nachbearbeitung an Ober- und Unterseite des Werkstücks 2 gleiche oder ähnliche Anforderungen gestellt werden.

Im Fall der in Fig. 6b beispielhaft dargestellten Vorrichtung greift die Referenzpositionsbestimmungseinrichtung 12 in der Breitenrichtung Y lediglich im Bereich der Oberseite des Werkstücks 2 an der Kantenkaschierung 1 an. Die so ermittelte Referenzposition auf der Oberfläche der Kantenkaschierung befindet sich daher zwangsläufig im Bereich der Oberseite des Werkstücks 2. Dies ist vorteilhaft, wenn an eine Seite des Werkstücks höhere Qualitätsanforderungen gestellt werden und daher eine höhere Genauigkeit der Nachbearbeitung an einer Seite des Werkstücks von Vorteil ist, wie dies beispielsweise bei der Herstellung von Tischplatten der Fall ist, bei denen regelmäßig die Unterseite optisch weniger stark wahrgenommen wird als die Oberseite.

### Bezugsziffernliste:

- 1: Kantenkaschierung
- 2: Werkstück
- 3: Kernlage
- 4: Beschichtung
- 5: Kantenband
- 6: Haftvermittler
- 7: Kantennachbearbeitungseinrichtung
- 8: Schicht
- 9: Weitere Nachbearbeitungseinrichtung
- 10: Markierung
- 11: Formatierungseinrichtung
- 12: Erste Referenzpositionsbestimmungseinrichtung
- 13: Zweite Referenzpositionsbestimmungseinrichtung
- 14: Kantenbandaufbringungseinrichtungen
- 15: Andruckeinrichtung
- 16: Leimauftragseinrichtung
- 17: Aktivierungseinrichtung
- 18: Positionsbestimmungseinrichtungen
- 19: Fördereinrichtung
- 20: Fläche
- 21: optische Kante
- X: Dickenrichtung
- Y: Breitenrichtung
- Z: Förderrichtung
- D1: Dicke der Kantenkaschierung
- D2: Dicke des Kantenbandes
- A1: erster Abstand
- A2: zweiter Abstand

## Patentansprüche

1. Verfahren zur Aufbringung von Kantenkaschierungen (1), die ein Kantenband (5) aufweisen, auf Schmalseiten plattenförmiger Werkstücke (2), insbesondere aus Holz und/oder Holzersatzwerkstoffen, wobei ein Kantenband (5) auf eine Schmalseite eines Werkstücks (2) aufgebracht wird,
**dadurch gekennzeichnet,**
**dass** zur Ermittlung der Dicke (D1) der aufgebrachten Kantenkaschierung (1) die Position einer Markierung (10) ermittelt wird, wobei ein erster Abstand (A1) der Markierung (10) von einer ersten Referenzposition auf der Oberfläche der Kantenkaschierung (1) gemessen wird und ein zweiter Abstand (A2) der Markierung (10) von einer zweiten Referenzposition auf der Oberfläche der mit dem Kantenband (5) zu versehenden Schmalseite gemessen und/oder beim Aufbringen der Markierung (10) auf einen bekannten Wert festgelegt wird, und wobei die Dicke (D1) durch Bildung der Differenz zwischen dem ersten Abstand (A1) und dem zweiten Abstand (A2) bestimmt wird.

2. Verfahren nach Anspruch 1,
**dadurch gekennzeichnet,**
**dass** die Markierung (10) vor dem Aufbringen des Kantenbandes (5) auf das Werkstück (2) aufgebracht wird.

3. Verfahren nach einem der vorigen Ansprüche,
**dadurch gekennzeichnet,**
**dass** als Oberflächenmerkmal eine identifizierbare Position auf dem Werkstück (2) als Markierung (10) genutzt wird.

4. Verfahren nach Anspruch 3,
**dadurch gekennzeichnet,**
**dass** die Position aufgrund der Struktur und/oder des Musters der Oberfläche des Werkstücks (2) identifizierbar ist.

5. Verfahren nach einem der vorigen Ansprüche,
**dadurch gekennzeichnet,**
**dass** die Position der Markierung (10) mit einem optischen Verfahren bestimmt wird.

6. Verfahren nach Anspruch 5,
**dadurch gekennzeichnet,**
**dass** die Position durch die Verwendung einer Kamera bestimmt wird.

7. Verfahren nach einem der vorigen Ansprüche,
**dadurch gekennzeichnet,**
**dass** die Kanten, insbesondere im Bereich des Übergangs zwischen dem Kantenband (5) und einer Flächenseite des Werkstücks (2) mit einer Kantennachbearbeitungseinrichtung (7), insbesondere mit einer Fräse und/oder mit einer Ziehklinge nachbearbeitet werden.

8. Verfahren nach Anspruch 7,
**dadurch gekennzeichnet,**
**dass** die Ansteuerung, insbesondere die Zustellung, der Kantennachbearbeitungseinrichtung (7) in Abhängigkeit von der ermittelten Dicke (D1) der Kantenkaschierung (1) erfolgt.

9. Verfahren nach einem der vorigen Ansprüche,
**dadurch gekennzeichnet,**
**dass** die Werkstücke (2) aus Holz und/oder Holzersatzstoffen sind.

10. Verfahren nach einem der vorigen Ansprüche,
**dadurch gekennzeichnet,**
**dass** ein Oberflächenmerkmal als Markierung (10) genutzt wird.

11. Vorrichtung zur Messung von Dicken (D1) von Kantenkaschierungen (1), die ein Kantenband (5) aufweisen, vorzugsweise nach einem Verfahren nach einem der vorigen Ansprüche, mit einer ersten Positionsbestimmungseinrichtung (18), wobei die Positionsbestimmungseinrichtung (18) dazu ausgebildet ist, eine Position einer Markierung (10) eines plattenförmigen Werkstücks (2) zu bestimmen, wobei die Vorrichtung weiter dazu ausgelegt ist, einen ersten Abstand (A1) der Markierung (10) von einer ersten Referenzposition auf der Oberfläche der Kantenkaschierung (1) und einen zweiten Abstand (A2) der Markierung (10) von einer zweiten Referenzposition auf der Oberfläche der mit dem Kantenband (5) zu versehenden Schmalseite zu messen und/oder beim Aufbringen der Markierung (10) auf einen bekannten Wert festzulegen, und einer Auswerteeinrichtung, die dazu eingerichtet ist, aufgrund der Position der Markierung (10) die Dicke (D1) der aufgebrachten Kantenkaschierung (1) zu bestimmen, indem sie die Dicke (D1) durch Bildung der Differenz zwischen dem ersten Abstand (A1) und dem zweiten Abstand (A2) bestimmt.

12. Vorrichtung zum Aufbringen von Kantenkaschierungen (1), die ein Kantenband (5) aufweisen, auf Schmalseiten plattenförmiger Werkstücke (2), mit einer Vorrichtung zur Messung von Dicken (D1) von Kantenkaschierungen (1) nach Anspruch 11.

13. Vorrichtung nach Anspruch 11 oder 12,
**dadurch gekennzeichnet,**
**dass** die Vorrichtung eine Kantennachbearbeitungseinrichtung (7) und eine Steuereinrichtung zur Steuerung der Kantenbearbeitungseinrichtung (7) aufweist, wobei die Steuereinrichtung dazu eingerichtet ist, die Kantennachbearbeitungseinrichtung (7) in Abhängigkeit von der Dicke (D1) der Kantenkaschierung (1) anzusteuern, insbesondere zuzustellen.

14. Vorrichtung nach Anspruch 13,
**dadurch gekennzeichnet,**
**dass** die Steuereinrichtung dazu eingerichtet ist, die Kantennachbearbeitungseinrichtung (7) in Abhängigkeit von der Dicke (D1) der Kantenkaschierung (1) zuzustellen.

## Claims

1. Method for applying edge laminations (1) which comprise an edging strip (5) to the narrow sides of plate-type workpieces (2), more particularly of wood and/or wood substitutes, wherein an edging strip (5) is applied to a narrow side of a workpiece (2), **characterised in that** in order to determine the thickness (D1) of the applied edge lamination (1) the position of a mark (10) is determined wherein a first distance (A1) is measured of the mark (10) from a first reference position on the surface of the edge lamination (1) and a second distance (A2) is measured of the mark (10) from a second reference position on the surface of the narrow side which is to be provided with the edging strip (5), and/or is fixed to a known value when applying the mark (10), and wherein the thickness (D1) is determined by forming the difference between the first distance (A1) and the second distance (A2).

2. Method according to claim 1 **characterised in that** the mark (10) is applied prior to applying the edging strip (5) to the workpiece (2).

3. Method according to one of the preceding claims **characterised in that** an identifiable position on the workpiece (2) is used as a surface feature as the mark (10).

4. Method according to claim 3 **characterised in that** the position can be identified as a result of the structure and/or the pattern of the surface of the workpiece (2).

5. Method according to one of the preceding claims **characterised in that** the position of the mark (0) is determined with an optical method.

6. Method according to claim 5 **characterised in that** the position is determined by using a camera.

7. Method according to one of the preceding claims **characterised in that** the edges, particularly in the region of the transition between the edging strip (5) and a flat surface side of the workpiece (2), are finished with an edge finishing device (7), more particularly with a milling cutter and/or with a scraper blade.

8. Method according to claim 7 **characterised in that** the control, more particularly the setting up of the edge finishing device (7), takes place in dependence on the determined thickness (D1) of the edge lamination (1).

9. Method according to one of the preceding claims **characterised in that** the workpieces (2) are made of wood and/or wood substitutes.

10. Method according to one of the preceding claims **characterised in that** a surface feature is used as the mark (10).

11. Device for measuring thicknesses (D1) of edge laminations (12) which comprise an edging strip (5), preferably according to a method according to one of the preceding claims, with a first position determining device (18) wherein the position determining device (18) is designed to determine a position of a mark (10) of a plate-form workpiece (2), wherein the device is further designed to measure a first distance (A1) of the mark (10) from a first reference position on the surface of the edge lamination (1) and a second distance (A2) of the mark (10) from a second reference position on the surface of the narrow side which is to be provided with the edging strip (5) and/or to fix it to a known value when applying the mark (10), and an evaluating device which is set up to determine the thickness (D1) of the applied edge lamination (1) based on the position of the mark (10) by determining the thickness (D1) by forming the difference between the first distance (A1) and the second distance (A2).

12. Device for applying edge laminations (1) which comprise an edging strip (5) to the narrow sides of plate-type workpieces (2) with a device for measuring the thicknesses (D1) of the edge laminations (1) according to claim 11.

13. Device according to claim 11 or 12 **characterised in that** the device comprises an edge finishing device (7) and a control device for controlling the edge finishing device (7) wherein the control device is set up to control, more particularly to position, the edge finishing device (7) in dependence on the thickness (D1) of the edge lamination (1).

14. Device according to claim 13 **characterised in that** the control device is set up to position the edge finishing device (7) in dependence on the thickness (D1) of the edge lamination (1).

## Revendications

1. Procédé d'application de doublage de bord (1), qui présentent une bande de chant (5), sur les côtés étroits de pièces à usiner (2) en forme de plaques, en particulier en bois et / ou en matériau de remplacement du bois, sachant qu'une bande de chant (5) est appliquée sur un côté étroit d'une pièce à traiter (2), **caractérisé en ce que**,
pour la détermination de l'épaisseur (D1) du doublage de bord (1) appliqué, la position d'un marquage (10) est déterminée, sachant qu'un premier intervalle (A1) du marquage (10) par rapport à une première position de référence sur la surface du doublage de bord (1) est mesuré et qu'un deuxième intervalle (A2) du marquage (10) par rapport à une deuxième position de référence sur la surface du côte étroit à pourvoir de la bande de chant (5) est mesuré, et / ou est fixé à une valeur connue lors de l'application du marquage (10), et sachant que l'épaisseur (D1) est déterminée par établissement de la différence entre le premier intervalle (A1) et le deuxième intervalle (A2).

2. Procédé selon la revendication 1,
**caractérisé en ce que**
le marquage (10) est appliquée avant l'application de la bande de chant (5) sur la pièce à traiter (2)

3. Procédé selon l'une des revendications précédentes,
**caractérisé en ce que**,
comme caractéristique de surface, une position identifiable sur la pièce à traiter (2) est utilisée comme marquage (10).

4. Procédé Dispositif selon la revendication 3,
**caractérisé en ce que**
la position peut être identifiée en raison de la structure et / ou du motif de la surface de la pièce à traiter (2).

5. Procédé selon l'une des revendications précédentes,
**caractérisé en ce que**
la position de le marquage (10) est déterminée selon un procédé optique.

6. Procédé selon la revendication 5,
**caractérisé en ce que**
la position est déterminée au moyen d'une caméra.

7. Procédé selon l'une des revendications précédentes,
**caractérisé en ce que**
les bords, en particulier dans la zone de transition entre la bande de chant (5) et une face de la pièce à traiter (2), sont soumis à un traitement ultérieur au moyen d'un dispositif de traitement ultérieur de bords (7), en particulier avec une fraise et / ou avec une lame de raclage.

8. Procédé selon la revendication 7,
**caractérisé en ce que**
la commande, en particulier l'ajustage du dispositif de traitement ultérieur de bords (7), sont effectués en fonction de l'épaisseur (D1) du doublage de bord (1) ayant été détectée.

9. Procédé selon l'une des revendications précédentes,
**caractérisé en ce que**
les pièces à traiter (2) sont en bois et / ou en matériaux de remplacement du bois.

10. Procédé selon l'une des revendications précédentes,
**caractérisé en ce que**,
comme marquage (10), on utilise une caractéristique de surface.

11. Dispositif de mesure d'épaisseurs (D1) de doublages de bords (1), qui présentent une bande de chant (5), de préférence par un procédé selon l'une des revendications précédentes, avec un premier dispositif de détermination de position (18), sachant que le dispositif de détermination de position (18) est conçu pour déterminer une position d'un marquage (10) d'une pièce à traiter (2) en forme de plaque, sachant que le dispositif est de plus conçu pour mesurer un premier intervalle (A1) entre le marquage (10) et une première position de référence sur la surface du doublage de bord (1) et un deuxième intervalle (A2) entre le marquage (10) et une deuxième position de référence sur la surface du côte étroit à pourvoir de la bande de chant (5) et / ou pour fixer une valeur connue lors de l'application du marquage (10), et avec un dispositif d'évaluation, qui est aménagée pour déterminer l'épaisseur (D1) du doublage de bord appliqué (1) en fonction de la position du marquage (10), en déterminant l'épaisseur (D1) par établissement de la différence entre le premier intervalle (A1) et le deuxième intervalle (A2),

12. Dispositif d'application de doublages de bords (1), qui présentent une bande de chant (5), sur les côtés étroits de pièce à traiter (2) en forme de plaques, avec un dispositifs de mesure d'épaisseurs (D1) de doublages de bord (1) selon la revendication 11.

13. Dispositif selon revendication 11 ou 12,
**caractérisé en ce que**
le dispositif présente un dispositif de traitement ultérieur de bords (7) et un dispositif de commande pour la commande du dispositif de traitement ultérieur de bords (7), sachant que le dispositif de commande est aménagé pour commander, en particulier pour ajuster le dispositif de traitement ultérieur de bord (7) en fonction de l'épaisseur (D1) du doublage de bord (1).

14. Dispositif selon la revendication 13,
**caractérisé en ce que**
le dispositif de commande est aménagé pour régler le dispositif de traitement ultérieur de bords (7) en fonction de l'épaisseur (D1) du doublage de bord (1).
